# EUROPEAN PATENT SPECIFICATION

(11) **EP 2 938 130 B1**
(45) Date of publication and mention of the grant of the patent: **28.12.2016**
(21) Application number: 14782817.2
(22) Date of filing: 09.04.2014
(51) Int. Cl.: H04W 48/02, H04W 8/18

(54) **METHOD AND MOBILE TERMINAL FOR MANAGING A CELL LOCK LIST IN A MOBILE TERMINAL**
VERFAHREN UND ENDGARÄT FÜR DIE VERWALTUNG EINER ZELLBLOCKIERTLISTE IN EINEM MOBILES ENDGERÄT
PROCÉDÉ ET TERMINAL MOBILE POUR LA GESTION D'UNE LISTE DE VERROUILLAGE DES CELLULES DANS UN TERMINAL MOBILE

(30) Priority: 09.04.2013 CN 201310121469
(43) Date of publication of application: 28.10.2015
(73) Proprietor: Huawei Device Co., Ltd., Shenzhen, Guangdong 518129 (CN)
(72) Inventor: QU, Wei, Shenzhen Guangdong 518129 (CN)
(74) Representative: Thun, Clemens
(86) International application number: PCT/CN2014/074956
(87) International publication number: WO 2014/166382

(56) References cited:
- CN-A- 101 106 815
- CN-A- 101 466 087
- CN-A- 101 656 950
- CN-A- 101 656 950
- CN-A- 102 026 126
- CN-A- 102 075 911
- US-A1- 2004 072 574

## Description

### TECHNICAL FIELD

The present invention relates to the field of communications technologies, and in particular, to a mobile terminal communication management method and a mobile terminal.

### BACKGROUND

CN 101 656 950A refers to a method and terminal for locking a cell.

At present, to optimize a network of a mobile operator and provide diverse services for a user, the mobile operator generally restricts a mobile terminal service to a particular geographic area to allow the user to use a communications service within a restricted range. In this way, the mobile operator can provide different services for mobile terminals within different ranges by utilizing an existing wireless network, and in addition, terminal mobility is improved.

In the prior art, before delivery, mobile terminals are all preconfigured with the number of calls (for example, the number of calls is N, where N≥3) required to be dialed for activating a lock cell application and a capacity of a lock cell list (for example, the list capacity is M, where M≥20 in China, and M≥3 outside China). When a user uses a mobile terminal for the first time, after N calls are successfully dialed, the mobile terminal activates the lock cell application. In a moving process of the user, the mobile terminal begins to gather a camped-on serving cell. When the lock cell list is not full and a gathered serving cell is a newly-added serving cell, attribute information of the gathered serving cell is stored into the lock cell list. Before the mobile terminal gathers all of M serving cells, the mobile terminal can perform normal communication; after the mobile terminal gathers all of M serving cells, the mobile terminal locks the lock cell list, that is, the mobile terminal will not add any gathered serving cell to the lock cell list any longer. Within a preset time, the mobile terminal determines whether a serving cell in which the mobile terminal is currently located is within the lock cell list.

If the serving cell in which the mobile terminal is currently located is within the lock cell list, the mobile terminal can perform normal communication; if the serving cell in which the mobile terminal is currently located is not within the lock cell list, the mobile terminal informs the user that the mobile terminal has been far away from the serving cell, and communication is restricted.

However, the solution in the prior art also reveals the following disadvantages: (1) A condition for a mobile terminal to determine that the mobile terminal is far away from a serving cell is strict. The mobile terminal is allowed to perform normal communication only when a serving cell in which the mobile terminal is currently located is within a lock cell list, but a preconfigured value of M is quite small at present, and there are many base stations in a position in which the mobile terminal is currently located (for example, one base station corresponds to three cells), and therefore, the mobile terminal easily determines a case that the mobile terminal has been far away from the serving cell in which the mobile terminal is currently located, thereby affecting use of the mobile terminal. (2) The prior art restricts a frequent change of a network of a mobile operator If the network of the mobile operator is frequently changed, the mobile terminal easily determines that the mobile terminal has been far away from the serving cell in which the mobile terminal is currently located. For example, the mobile terminal locks three serving cells: A, B, and C, and the mobile terminal can be normally used in a position X. After the mobile operator changes the network and adds a serving cell D in the position X, the mobile terminal may use the cell D as a serving cell after a search, the serving cell D is not within a lock list according to the condition of determining in the prior art. In this case, a service of the mobile terminal is restricted, which affects use of the mobile terminal and brings inconvenience to a user.

### SUMMARY

Embodiments of the present invention provide a mobile terminal communication management method and a mobile terminal, which can implement that the mobile terminal
locks a cell within a particular range to keep normal communication of the mobile terminal.

According to a first aspect, an embodiment of the present invention provides a mobile terminal communication management method, where the method includes:
acquiring, by a mobile terminal, attribute information of a current camped-on serving cell;
   determining whether a lock cell list of the mobile terminal has an idle node;
   when the lock cell list has no idle node, determining whether the serving cell and a neighboring cell of the serving cell have an intersection with a cell in the lock cell list; and
   if the serving cell and the neighboring cell have an intersection with the cell in the lock cell list, performing, by the mobile terminal, normal communication within the serving cell.

In a first possible implementation manner, the method further includes:
if the serving cell and the neighboring cell have no intersection with the cell in the lock cell list, restricting communication of the mobile terminal.

In a second possible implementation manner, the method further includes:
when the lock cell list of the mobile terminal has an idle node and when the attribute information of the serving cell does not exist in the lock cell list, storing the acquired attribute information of the serving cell into the lock cell list, and performing, by the mobile terminal, normal communication within the serving cell.

With reference to the first aspect, or the first or second possible implementation manner of the first aspect, in a third possible implementation manner, the mobile terminal is a mobile phone or a fixed wireless terminal.

According to a second aspect, an embodiment of the present invention provides a mobile terminal communication management method, where the method includes:
acquiring, by a mobile terminal, attribute information of a camped-on cell, where the camped-on cell includes a serving cell on which the mobile terminal is camped and a neighboring cell of the serving cell;
when a lock cell list of the mobile terminal is empty, storing the acquired attribute information of the serving cell and the acquired attribute information of the neighboring cell into the lock cell list;
determining whether a current camped-on serving cell and a neighboring cell of the current serving cell have an intersection with a cell in the lock cell list; and
if the current camped-on serving cell and the neighboring cell have an intersection with the cell in the lock cell list, performing, by the mobile terminal, normal communication within the current camped-on serving cell and the neighboring cell.

In a first possible implementation manner, the method further includes:
if the current camped-on serving cell and the neighboring cell have no intersection with the cell in the lock cell list, restricting communication of the mobile terminal.

In a second possible implementation manner, if the current camped-on serving cell and the neighboring cell have an intersection with the cell in the lock cell list, the keeping, by the mobile terminal, normal communication within the current camped-on serving cell and the neighboring cell specifically includes:
if the current camped-on serving cell and the neighboring cell have an intersection with the cell in the lock cell list, determining whether the lock cell list has an idle node; and
when the lock cell list has an idle node and when the current camped-on serving cell and the neighboring cell do not exist in the lock cell list, storing the acquired attribute information of both the current camped-on serving cell and the neighboring cell into the lock cell list, and keeping, by the mobile terminal, normal communication within the current camped-on serving cell and the neighboring cell; or
when the lock cell list has no idle node, locking, by the mobile terminal, the lock cell list, and keeping, by the mobile terminal, normal communication within the current camped-on serving cell and the neighboring cell.

With reference to the second aspect, or the first or second possible implementation manner of the second aspect, in a third possible implementation manner, the mobile terminal is a mobile phone or a fixed wireless terminal.

According to a third aspect, an embodiment of the present invention provides a mobile terminal, where the mobile terminal includes:
an acquiring unit, configured to acquire attribute information of a current camped-on serving cell;
a first determining unit, configured to determine whether a lock cell list of the mobile terminal has an idle node;
a second determining unit, configured to: when the lock cell list has no idle node, determine whether the serving cell and a neighboring cell of the serving cell have an intersection with a cell in the lock cell list; and
a processing unit, configured to: if the serving cell and the neighboring cell have an intersection with the cell in the lock cell list, perform normal communication for the mobile terminal within the serving cell.

In a first possible implementation manner, the processing unit is further configured to:
if the serving cell and the neighboring cell have no intersection with the cell in the lock cell list, restrict communication of the mobile terminal.

In a second possible implementation manner, the mobile terminal further includes:
a storage unit, configured to: when the lock cell list of the mobile terminal has an idle node and when the attribute information of the serving cell does not exist in the lock cell list, store the acquired attribute information of the serving cell into the lock cell list, and perform normal communication for the mobile terminal within the serving cell.

With reference to the third aspect, or the first or second possible implementation manner of the third aspect, in a third possible implementation manner, the mobile terminal is a mobile phone or a fixed wireless terminal.

According to a fourth aspect, an embodiment of the present invention provides a mobile terminal, where the mobile terminal includes:
an acquiring unit, configured to acquire attribute information of a camped-on cell, where the camped-on cell includes a serving cell on which the mobile terminal is camped and a neighboring cell of the serving cell;
a storage unit, configured to: when a lock cell list of the mobile terminal is empty, store the acquired attribute information of the serving cell and the acquired attribute information of the neighboring cell into the lock cell list;
   a determining unit, configured to determine whether a current camped-on serving cell and a neighboring cell of the current serving cell have an intersection with a cell in the lock cell list; and
a processing unit, configure to: if the current camped-on serving cell and the neighboring cell have an intersection with the cell in the lock cell list, keep normal communication of the mobile terminal within the current camped-on serving cell and the neighboring cell.

In a first possible implementation manner, the processing unit is further configured to:
if the current camped-on serving cell and the neighboring cell have no intersection with the cell in the lock cell list, restrict communication of the mobile terminal.

In a second possible implementation manner, the processing unit is specifically configured to:
a determining subunit, configured to: if the current camped-on serving cell and the neighboring cell have an intersection with the cell in the lock cell list, determine whether the lock cell list has an idle node; and
   a storage subunit, configured to: when the lock cell list has an idle node and when the current camped-on serving cell and the neighboring cell do not exist in the lock cell list, store the acquired attribute information of both the current camped-on serving cell and the neighboring cell into the lock cell list, and keep normal communication of the mobile terminal within the current camped-on serving cell and the neighboring cell; or
a locking subunit, configured to: when the lock cell list has no idle node, lock the lock cell list for the mobile terminal, and keep normal communication of the mobile terminal within the current camped-on serving cell and the neighboring cell.

With reference to the fourth aspect, or the first or second possible implementation manner of the fourth aspect, in a third possible implementation manner, the mobile terminal is a mobile phone or a fixed wireless terminal.

Therefore, according to the mobile terminal communication management method and the mobile terminal that are provided in the embodiments of the present invention, after the mobile terminal acquires attribute information of a serving cell, it is determined whether a lock cell list of the mobile terminal has an idle node; when the lock cell list has an idle node, it is determined whether a serving cell and a neighboring cell of the serving cell have an intersection with a cell in the lock cell list; and if the serving cell and the neighboring cell have an intersection with the cell in the lock cell list, the mobile terminal keeps normal communication within the serving cell; otherwise, communication of the mobile terminal is restricted. In the embodiments of the present invention, because the mobile terminal identifies the serving cell, the neighboring cell, and the cell in the lock cell list, the extension of a cell is enlarged, which further extends a condition for the mobile terminal to determine that the mobile terminal is far away from the serving cell in the prior art, and facilitates use for a user. In addition, when a mobile operator changes a current network, normal communication of the mobile terminal can still be ensured, thereby reducing a case that communication of the mobile terminal is restricted.

### BRIEF DESCRIPTION OF DRAWINGS

FIG. 1 is a flowchart of a method of a lock cell according to an embodiment of the present invention;
FIG. 2 is a schematic diagram of positions of a serving cell and a neighboring cell according to an embodiment of the present invention;
FIG. 3 is a flowchart of another method of a lock cell according to an embodiment of the present invention;
FIG. 4 is a structural diagram of a mobile terminal according to an embodiment of the present invention;
FIG. 5 is a structural diagram of another mobile terminal according to an embodiment of the present invention;
FIG. 6 is a structural diagram of hardware of a mobile terminal according to an embodiment of the present invention; and
FIG. 7 is a structural diagram of hardware of another mobile terminal according to an embodiment of the present invention.

### DESCRIPTION OF EMBODIMENTS

To make the objectives, technical solutions, and advantages of the present invention clearer, the following further describes the specific embodiments of the present invention in detail with reference to the accompanying drawings.

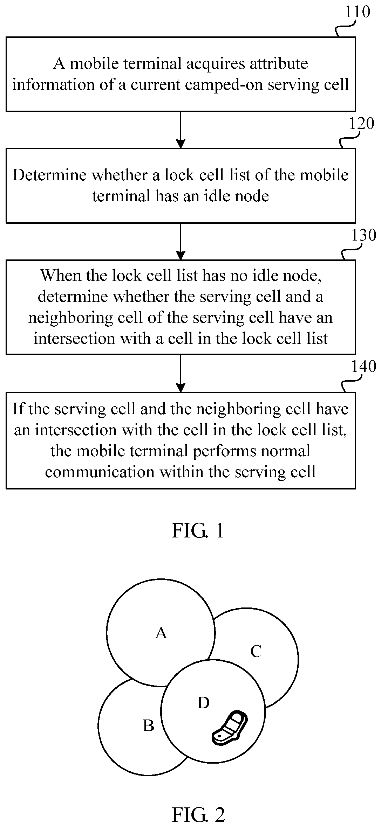

The following uses FIG. 1 as an example to describe a mobile terminal communication management method provided in Embodiment 1 of the present invention. FIG. 1 is a flowchart of a mobile terminal communication management method according to an embodiment of the present invention. An execution body in this embodiment of the present invention is a mobile terminal, where the mobile terminal may be specifically a mobile phone or a fixed wireless terminal. As shown in FIG. 1, the embodiment includes the following steps:
Step 110: The mobile terminal acquires attribute information of a current camped-on serving cell.

Specifically, the mobile terminal acquires the attribute information of the current camped-on serving cell, where the current camped-on serving cell specifically refers to a cell that may provide a communications service for the mobile terminal.

In this embodiment of the present invention, the attribute information of the serving cell specifically includes a cell identity (Cell ID, CI for short) of the serving cell and a location area code (Location Area Code, LAC for short) of the serving cell. The mobile terminal marks the serving cell by using the CI and the LAC.

Further, before the mobile terminal acquires attribute information of a current camped-on serving cell, the following is further included: at delivery of the mobile terminal, a mobile terminal vendor preconfigures, according to a requirement of a mobile operator, the number of calls (for example, the number of calls is N) required to be dialed for each mobile terminal to activate a lock cell application and a maximum capacity of a lock cell list (for example, the maximum capacity of the lock cell list is M, where the lock cell list is used to store a serving cell on which the mobile terminal is camped) in the mobile terminal.

When a user uses the mobile terminal for the first time, the mobile terminal is powered on, and the mobile terminal registers with a network; after network registration is successful, and after the user successfully dials N calls, the mobile terminal activates the lock cell application of the mobile terminal, begins to gather a surrounding serving cell (Serving Cell, SC for short), acquires attribute information of the surrounding serving cell, and stores the acquired attribute information of the surrounding serving cell into the lock cell list (it is understandable that, when the mobile terminal activates the lock cell application for the first time, the lock cell list is empty; and when the mobile terminal searches out the surrounding serving cell and the serving cell does not exist in the lock cell list, the mobile terminal stores the acquired attribute information of the surrounding serving cell into the lock cell list).

Step 120: Determine whether a lock cell list of the mobile terminal has an idle node. Specifically, after acquiring the attribute information of the current camped-on serving cell, the mobile terminal determines whether the lock cell list has an idle node (that is, whether the lock cell list stores M serving cells). When the lock cell list has no idle node (that is, the lock cell list has stored M serving cells), step 130 is executed.
Step 130: When the lock cell list has no idle node, determine whether the serving cell and a neighboring cell of the serving cell have an intersection with a cell in the lock cell list.

Specifically, when the lock cell list has no idle node, the mobile terminal determines whether the current camped-on serving cell and the neighboring cell of the serving cell have an intersection with the cell in the lock cell list.

Further, that the mobile terminal determines whether the current camped-on serving cell and the neighboring cell of the serving cell have an intersection with a cell in the lock cell list is specifically:
that the mobile terminal periodically determines whether the current camped-on serving cell and the neighboring cell of the serving cell have an intersection with a serving cell stored in the lock cell list. For example, as shown in FIG. 2, which is a schematic diagram of positions of a serving cell and a neighboring cell according to an embodiment of the present invention, the mobile terminal uses a cell D as a current camped-on serving cell, and uses cells A, B, and C as neighboring cells of the cell D; in this case, the mobile terminal determines whether the cell D and the cells A, B, and C have an intersection with the serving cell stored in the lock cell list.
   Step 140: If the serving cell and the neighboring cell have an intersection with the cell in the lock cell list, the mobile terminal performs normal communication within the serving cell.

Specifically, according to the determining in step 130, if the current camped-on serving cell and the neighboring cell have an intersection with the cell in the lock cell list, the mobile terminal keeps normal communication within the serving cell.

In an example, as shown in FIG. 2, when performing a search for the first time, the mobile terminal uses a cell A as a serving cell when the mobile terminal is in a place A, uses a cell B as a serving cell when the mobile terminal is in a place B, and uses a cell C as a serving cell when the mobile terminal is in a place C. Because a lock cell list is empty at the initial search, the mobile terminal stores acquired attribute information of the serving cells A, B and C into the lock cell list. When the mobile terminal moves or the mobile operator adds a cell D to a current network, the mobile terminal uses the cell D as a serving cell in which the mobile terminal is currently located and uses the cells A, B, and C as neighboring cells of the cell D. The mobile terminal determines whether the lock cell list has an idle node. When the lock cell list has no idle node, attribute information of the serving cell D cannot be stored into the lock cell list, and then the mobile terminal determines whether the serving cell D, and the neighboring cells A, B, and C have an intersection with a cell in the lock cell list. In this case, because the cells A, B and C, which serve as the neighboring cells of the cell D, have an intersection with the cell in the lock cell list, the mobile terminal can still keep normal communication, thereby enlarging the extension of a cell. When a capacity of the lock cell list is small or the mobile operator adds a cell to the current network, normal communication of the mobile terminal can also be ensured, thereby facilitating use for a user.

Optionally, the determining in step 120 in this embodiment of the present invention further includes another implementation case, that is, a procedure for processing the mobile terminal when the lock cell list has an idle node.

When the lock cell list of the mobile terminal has an idle node and when the attribute information of the serving cell does not exist in the lock cell list, the mobile terminal stores the acquired attribute information of the serving cell into the lock cell list, and the mobile terminal performs normal communication within the serving cell.

Specifically, when the lock cell list has an idle node and when the attribute information that is of the serving cell and acquired in step 110 does not exist in the lock cell list, the mobile terminal stores the acquired attribute information of the serving cell into the lock cell list, and in this case, the mobile terminal can keep normal communication.

It is understandable that, when the lock cell list has an idle node, the mobile terminal can store the acquired attribute information of the serving cell into the lock cell list at any time.

When the lock cell list has no idle node, the mobile terminal locks the lock cell list, that is, when the mobile terminal searches out a serving cell again after the mobile terminal changes a position, because the lock cell list has been locked, the mobile terminal does not store acquired attribute information of the serving cell into the lock cell list any longer.

Optionally, the determining in step 130 in this embodiment of the present invention further includes another implementation case, that is, if the serving cell and the neighboring cell have no intersection with the cell in the lock cell list, communication of the mobile terminal is restricted.

Specifically, according to the determining in step 130, if the serving cell in which the mobile terminal is currently located and the neighboring cell have no intersection with the cell in the lock cell list, the mobile terminal displays prompt information, so as to inform a user that communication of the mobile terminal is restricted.

Therefore, according to the lock cell method provided in this embodiment of the present invention, after acquiring attribute information of a serving cell, a mobile terminal determines whether a lock cell list of the mobile terminal has an idle node; when the lock cell list has an idle node, determines whether the serving cell and a neighboring cell of the serving cell have an intersection with a cell in the lock cell list; and if the serving cell and the neighboring cell have an intersection with the cell in the lock cell list, the mobile terminal keeps normal communication within the serving cell; otherwise, communication of the mobile terminal is restricted. In this embodiment of the present invention, because the mobile terminal identifies the serving cell, the neighboring cell, and the cell in the lock cell list, the extension of a cell is enlarged, which further extends a condition for the mobile terminal to determine that the mobile terminal is far away from the serving cell in the prior art, and facilitates use for a user. In addition, when a mobile operator changes a current network, normal communication of the mobile terminal can still be ensured, thereby reducing a case that communication of the mobile terminal is restricted.

To make the objectives, technical solutions, and advantages of the present invention clearer, the following further describes the specific embodiments of the present invention in detail with reference to the accompanying drawings.

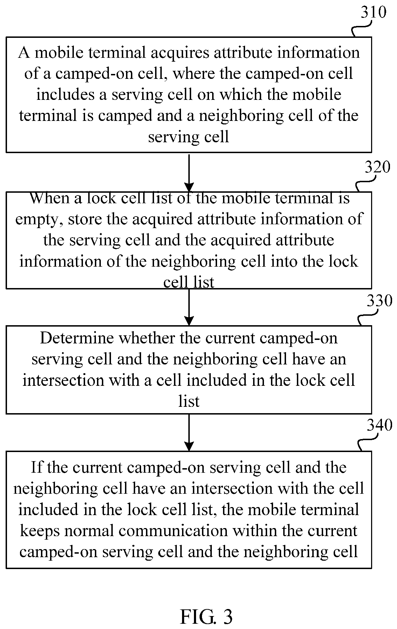

The following uses FIG. 3 as an example to describe a mobile terminal communication management method provided in Embodiment 2 of the present invention. FIG. 3 is a flowchart of another mobile terminal communication management method according to an embodiment of the present invention. An execution body in this embodiment of the present invention is a mobile terminal, where the mobile terminal may be specifically a mobile phone or a fixed wireless terminal. As shown in FIG. 3, this embodiment includes the following steps:
Step 310: The mobile terminal acquires attribute information of a camped-on cell, where the camped-on cell includes a serving cell on which the mobile terminal is camped and a neighboring cell of the serving cell.

Specifically, at delivery of the mobile terminal, a mobile terminal vendor preconfigures, according to a requirement of a mobile operator, the number of calls (for example, the number of calls is N) required to be dialed for each mobile terminal to activate a lock cell application and a maximum capacity of a lock cell list (for example, the maximum capacity of the lock cell list is M, where the lock cell list is used to store a serving cell of the mobile terminal and a neighboring cell of the serving cell) in the mobile terminal.

When a user uses the mobile terminal for the first time, the user powers on the mobile terminal, and the mobile terminal registers with a network; after network registration is successful, and after the user successfully dials N calls, the mobile terminal activates the lock cell application of the mobile terminal, begins to gather a camped-on serving cell and a neighboring cell of the serving cell, and acquires attribute information of the camped-on serving cell and the neighboring cell.

In this embodiment of the present invention, both the attribute information of the serving cell and the attribute information of the neighboring cell include a cell identity (CI) and a location area code (LAC). The mobile terminal marks the serving cell or the neighboring cell by using different CIs and LACs.
Step 320: When a lock cell list of the mobile terminal is empty, store the acquired attribute information of both the serving cell and the neighboring cell into the lock cell list.

Specifically, after the attribute information of both the camped-on serving cell and the neighboring cell is acquired, the mobile terminal stores the acquired attribute information of both the serving cell and the neighboring cell into the lock cell list when the lock cell list is empty.

Further, in an implementation manner, after the attribute information of a cell is acquired, the mobile terminal identifies whether the lock cell list is empty (that is, whether the lock cell list stores M cells; it is understandable that, when the mobile terminal acquires the attribute information of both the camped-on serving cell and the neighboring cell for the first time, the lock cell list may be considered as empty). When the lock cell list is empty, the mobile terminal stores the acquired attribute information of both the camped-on serving cell and the neighboring cell into the lock cell list, and in this case, the mobile terminal can keep normal communication.
Step 330: Determine whether the current camped-on serving cell and the neighboring cell have an intersection with a cell in the lock cell list.

Specifically, after the mobile terminal stores the attribute information of both the camped-on serving cell and the neighboring cell into the lock cell list, the mobile terminal identifies whether the current camped-on serving cell and the neighboring cell have an intersection with a cell in the lock cell list.

Further, the mobile terminal may periodically determine whether the current camped-on serving cell and the neighboring cell of the serving cell have an intersection with the cell in the lock cell list.

It is understandable that, because the mobile terminal acquires, in step 310, attribute information of multiple camped-on serving cells and neighboring cells, and a serving cell on which the mobile terminal is currently camped changes according to movement of the mobile terminal, the serving cell may then serve as a neighboring cell of another serving cell.
Step 340: If the current camped-on serving cell and the neighboring cell have an intersection with the cell in the lock cell list, the mobile terminal performs normal communication within the current camped-on serving cell and the neighboring cell.

Specifically, according to the determining in step 330, if the current camped-on serving cell and the neighboring cell have an intersection with the cell in the lock cell list, the mobile terminal may keep normal communication within the current camped-on serving cell and the neighboring cell.

Further, if the current camped-on serving cell and the neighboring cell have an intersection with the cell in the lock cell list, it is determined whether the lock cell list has an idle node.

When the lock cell list has an idle node and when the current camped-on serving cell and the neighboring cell do not exist in the lock cell list, the mobile terminal stores the acquired attribute information of both the current camped-on serving cell and the neighboring cell into the lock cell list, and the mobile terminal keeps normal communication within the current camped-on serving cell and the neighboring cell.

When the lock cell list has no idle node, the mobile terminal locks the lock cell list, and the mobile terminal keeps normal communication within the current camped-on serving cell and the neighboring cell.

In an example, as shown in FIG. 2, when performing a search in a first position for the first time, the mobile terminal uses a cell A as a serving cell, and uses cells B and C as neighboring cells of the serving cell A. The mobile terminal acquires attribute information of the cells A, B, and C. When determining that a lock cell list is empty, the mobile terminal stores the attribute information of the cells A, B, and C into the lock cell list. When a mobile operator adds a cell D to a current network, the mobile terminal determines whether a current camped-on cell (in this example, the current camped-on cell includes the cell D, and cells A, B and C) is included in the lock cell list. Because the cells A, B and C, which serve as neighboring cells of the cell D, are included in the lock cell list, the mobile terminal can still keep normal communication, thereby enlarging the extension of a cell. When a capacity of the lock cell list is small or the mobile operator adds a cell to the current network, normal communication of the mobile terminal can also be ensured, thereby facilitating use for a user.

Optionally, after step 310 in this embodiment of the present invention, a step of determining, by the mobile terminal, whether the lock cell list is empty is further included. If the lock cell list of the mobile terminal is empty, step 320 is executed; if the lock cell list is not empty as determined by the mobile terminal, step 330 is directly executed by the mobile terminal.

Specifically, after the mobile terminal acquires the attribute information of the camped-on cell in the first position, the mobile terminal determines whether the lock cell list is empty. Because it is the first time that the mobile terminal has acquired the attribute information of the camped-on cell in the first position, the lock cell list is empty, and the mobile terminal stores the acquired the attribute information of the camped-on cell into the lock cell list. In this case, after a user powers off the mobile terminal and moves to a second position (in this embodiment of the present invention, a distance between the first position and the second position is relatively long), the user powers on the mobile terminal in the second position. The mobile terminal acquires attribute information of a camped-on cell again and identifies that the lock cell list is not empty, and then the mobile terminal determines whether the current camped-on serving cell and the neighboring cell have an intersection with the cell in the lock cell list. If the current camped-on serving cell and the neighboring cell have an intersection with the cell in the lock cell list, the mobile terminal keeps normal communication;otherwise communication of the mobile terminal is restricted.

Further, in an example, when performing a search in a first position for the first time, the mobile terminal uses a cell A as a serving cell, and uses cells B and C as neighboring cells of the serving cell A. The mobile terminal acquires attribute information of the cells A, B, and C. When determining that a lock cell list is empty, the mobile terminal stores the attribute information of the cells A, B, and C into the lock cell list. If the mobile terminal is powered off and moved to a second position for use, a serving cell for the second position is a cell W, and cells X and Y serve as neighboring cells of the serving cell W. After the mobile terminal is powered on in the second position, the mobile terminal acquires attribute information of the cells W, X, and Y, determines that the lock cell list is not empty, and determines whether a current camped-on cell is included in the lock cell list. Because none of the cells W, X, and Y are included in the lock cell list, communication of the mobile terminal is directly restricted. As a result, no matter whether the mobile terminal gathers all of M cells in the first position, the mobile terminal determines, due to a relatively long distance between the first position and the second position, that a cell on which the mobile terminal is currently located is not included in the lock cell list. Therefore, communication of the mobile terminal is restricted, thereby protecting profits of a mobile operator.

Optionally, the determining in step 330 in this embodiment of the present invention further includes another implementation case, that is, if the current camped-on serving cell and the neighboring cell have no intersection with the cell in the lock cell list, communication of the mobile terminal is restricted.

Specifically, according to the determining in step 330, if the current camped-on serving cell and the neighboring cell have no intersection with the cell in the lock cell list, the mobile terminal displays prompt information, so as to inform a user that communication of the mobile terminal is restricted.

Therefore, according to the lock cell method provided in this embodiment of the present invention, a mobile terminal stores acquired attribute information of a cell into a lock cell list, and identifies whether a current camped-on cell is included in the lock cell list. If the current camped-on cell is included in the lock cell list, the mobile terminal keeps normal communication; otherwise, communication of the mobile terminal is restricted. In this embodiment of the present invention, because the mobile terminal identifies the current camped-on cell and the cell stored in the lock cell list, the extension of a cell is enlarged, which further extends a condition for the mobile terminal to determine that the mobile terminal is far away from the serving cell in the prior art, and facilitates use for a user. In addition, when a mobile operator changes a current network, normal communication of the mobile terminal can still be ensured, thereby reducing a case that communication of the mobile terminal is restricted. Further, according to the lock cell method provided in this embodiment of the present invention, it may be further avoided that the mobile terminal is used in multiple location areas, which further protects profits of the mobile operator.

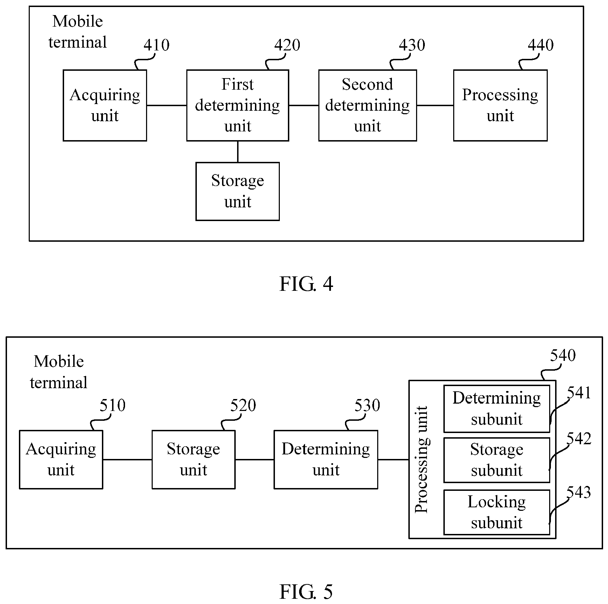

Accordingly, Embodiment 3 of the present invention further provides a mobile terminal, which is used to implement the mobile terminal communication management method in Embodiment 1. As shown in FIG. 4, the mobile terminal includes an acquiring unit 410, a first determining unit 420, a second determining unit 430, and a processing unit 440.

The acquiring unit 410 is configured to acquire attribute information of a current camped-on serving cell.

The first determining unit 420 is configured to determine whether a lock cell list of the mobile terminal has an idle node.

The second determining unit 430 is configured to: when the lock cell list has no idle node, determine whether the serving cell and a neighboring cell of the serving cell have an intersection with a cell in the lock cell list.

The processing unit 440 is configured to: if the serving cell and the neighboring cell have an intersection with the cell in the lock cell list, perform normal communication for the mobile terminal within the serving cell.

The processing unit 440 is further configured to: if the serving cell and the neighboring cell have no intersection with the cell in the lock cell list, restrict communication of the mobile terminal.

The terminal further includes a storage unit 450, which is configured to: when the lock cell list of the mobile terminal has an idle node and when the attribute information of the serving cell does not exist in the lock cell list, store the acquired attribute information of the serving cell into the lock cell list, and perform normal communication for the mobile terminal within the serving cell.

The mobile terminal provided in this embodiment of the present invention is specifically a mobile phone or a fixed wireless terminal.

Therefore, according to the mobile terminal provided in this embodiment of the present invention, after acquiring attribute information of a serving cell, the mobile terminal determines whether a lock cell list of the mobile terminal has an idle node; when the lock cell list has an idle node, determines whether the serving cell and a neighboring cell of the serving cell have an intersection with a cell in the lock cell list; and if the serving cell and the neighboring cell have an intersection with the cell in the lock cell list, the mobile terminal keeps normal communication within the serving cell; otherwise, communication of the mobile terminal is restricted. In this embodiment of the present invention, because the mobile terminal identifies the serving cell, the neighboring cell, and the cell in the lock cell list, the extension of a cell is enlarged, which further extends a condition for the mobile terminal to determine that the mobile terminal is far away from the serving cell in the prior art, and facilitates use for a user. In addition, when a mobile operator changes a current network, normal communication of the mobile terminal can still be ensured, thereby reducing a case that communication of the mobile terminal is restricted.

Accordingly, Embodiment 4 of the present invention further provides a mobile terminal, which is used to implement the mobile terminal communication management method in Embodiment 2. As shown in FIG. 5, the mobile terminal includes an acquiring unit 510, a storage unit 520, a determining unit 530, and a processing unit 540.

The acquiring unit 510 is configured to acquire attribute information of a camped-on cell, where the camped-on cell includes a serving cell on which the mobile terminal is camped and a neighboring cell of the serving cell.

The storage unit 520 is configured to: when a lock cell list of the mobile terminal is empty, store the acquired attribute information of the serving cell and the acquired attribute information of the neighboring cell into the lock cell list.

The determining unit 530 is configured to determine whether the current camped-on serving cell and the neighboring cell have an intersection with the cell in the lock cell list.

The processing unit 540 is configure to: if the current camped-on serving cell and the neighboring cell have an intersection with the cell in the lock cell list, keep normal communication of the mobile terminal within the current camped-on serving cell and the neighboring cell.

The processing unit 540 is further configured to: if the current camped-on serving cell and the neighboring cell have no intersection with the cell in the lock cell list, restrict communication of the mobile terminal.

The processing unit 540 further includes a determining subunit 541, configured to: if the current camped-on serving cell and the neighboring cell have an intersection with the cell in the lock cell list, determine whether the lock cell list has an idle node; and
a storage subunit 542, configured to: when the lock cell list has an idle node and when the current camped-on serving cell and the neighboring cell do not exist in the lock cell list, store the acquired attribute information of both the current camped-on serving cell and the neighboring cell into the lock cell list, and keep normal communication of the mobile terminal within the current camped-on serving cell and the neighboring cell; or
a locking subunit 543, configured to: when the lock cell list has no idle node, lock the lock cell list for the mobile terminal, and keep normal communication of the mobile terminal within the current camped-on serving cell and the neighboring cell.

The mobile terminal provided in this embodiment of the present invention is specifically a mobile phone or a fixed wireless terminal.

Therefore, according to the mobile terminal provided in this embodiment of the present invention, the mobile terminal stores acquired attribute information of a cell into a lock cell list, and identifies whether a current camped-on cell is included in the lock cell list. If the current camped-on cell is included in the lock cell list, the mobile terminal keeps normal communication; otherwise, communication of the mobile terminal is restricted. In this embodiment of the present invention, because the mobile terminal identifies the current camped-on cell and the cell stored in the lock cell list, the extension of a cell is enlarged, which further extends a condition for the mobile terminal to determine that the mobile terminal is far away from the serving cell in the prior art, and facilitates use for a user. In addition, when a mobile operator changes a current network, normal communication of the mobile terminal can still be ensured, thereby reducing a case that communication of the mobile terminal is restricted. Further, according to the lock cell method provided in this embodiment of the present invention, it may be further avoided that the mobile terminal is used in multiple location areas, which further protects profits of the mobile operator.

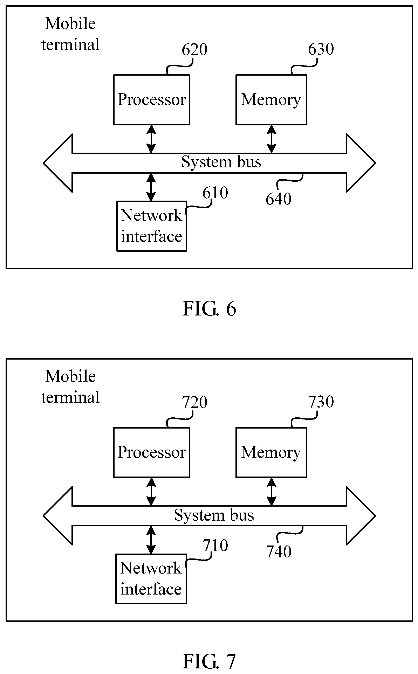

In addition, the mobile terminal provided in Embodiment 3 of the present invention may be further implemented in the following form and is used to implement the mobile terminal communication management method in Embodiment 1 of the present invention. As shown in FIG. 6, the mobile terminal includes a network interface 610, a processor 620, and a memory 630. A system bus 640 is configured to connect the network interface 610, the processor 620, and the memory 630.

The network interface 610 is configured to perform interactive communication with a serving cell and a neighboring cell.

The memory 630 may be a permanent memory, for example, a hard disk drive and a flash memory, and the memory 630 has a software module and a device driver. The software module can execute various functional modules of the foregoing method in the present invention; and the device driver may be a network and interface driver.

When the mobile terminal is started, these software components are loaded to the memory 630 and then are accessed by the processor 620, and the processor 620 executes the following instructions:
acquiring attribute information of a current camped-on serving cell;
determining whether a lock cell list of the mobile terminal has an idle node;
when the lock cell list has no idle node, determining whether the serving cell and a neighboring cell of the serving cell have an intersection with a cell in the lock cell list; and
if the serving cell and the neighboring cell have an intersection with the cell in the lock cell list, performing, by the mobile terminal, normal communication within the serving cell.

Further, after accessing the software components of the memory 630, the processor executes an instruction for the following process:
if the serving cell and the neighboring cell have no intersection with the cell in the lock cell list, restricting communication of the mobile terminal.

Further, after accessing the software components of the memory 630, the processor executes an instruction for the following process:
when the lock cell list of the mobile terminal has an idle node and when the attribute information of the serving cell does not exist in the lock cell list, storing the acquired attribute information of the serving cell into the lock cell list, and performing, by the mobile terminal, normal communication within the serving cell.

Further, the mobile terminal is specifically a mobile phone or a fixed wireless terminal.

Therefore, after acquiring attribute information of a serving cell, the mobile terminal determines whether a lock cell list of the mobile terminal has an idle node; when the lock cell list has an idle node, determines whether the serving cell and a neighboring cell of the serving cell have an intersection with a cell in the lock cell list; and if the serving cell and the neighboring cell have an intersection with the cell in the lock cell list, the mobile terminal keeps normal communication within the serving cell; otherwise, communication of the mobile terminal is restricted. In this embodiment of the present invention, because the mobile terminal identifies the serving cell, the neighboring cell, and the cell in the lock cell list, the extension of a cell is enlarged, which further extends a condition for the mobile terminal to determine that the mobile terminal is far away from the serving cell in the prior art, and facilitates use for a user. In addition, when a mobile operator changes a current network, normal communication of the mobile terminal can still be ensured, thereby reducing a case that communication of the mobile terminal is restricted.

In addition, the mobile terminal provided in Embodiment 4 of the present invention may be further implemented in the following form and is used to implement the mobile terminal communication management method in Embodiment 2 of the present invention. As shown in FIG. 7, the mobile terminal includes a network interface 710, a processor 720, and a memory 730. A system bus 740 is configured to connect the network interface 710, the processor 720, and the memory 730.

The network interface 710 is configured to perform interactive communication with a serving cell and a neighboring cell.

The memory 730 may be a permanent memory, for example, a hard disk drive and a flash memory, and the memory 730 has a software module and a device driver. The software module can execute various functional modules of the foregoing method in the present invention; and the device driver may be a network and interface driver.

When the mobile terminal is started, these software components are loaded to the memory 730 and then are accessed by the processor 720, and the processor 720 executes the following instructions:
acquiring attribute information of a camped-on cell, where the camped-on cell includes a serving cell on which the mobile terminal is camped and a neighboring cell of the serving cell;
when a lock cell list of the mobile terminal is empty, storing the acquired attribute information of the serving cell and the acquired attribute information of the neighboring cell into the lock cell list;
determining whether the current camped-on serving cell and the neighboring cell have an intersection with a cell in the lock cell list; and
if the current camped-on serving cell and the neighboring cell have an intersection with the cell in the lock cell list, performing, by the mobile terminal, normal communication within the current camped-on serving cell and the neighboring cell.

Further, after accessing the software components of the memory 730, the processor executes an instruction for the following process:
if the current camped-on serving cell and the neighboring cell have no intersection with the cell in the lock cell list, restricting communication of the mobile terminal.

Further, after accessing the software components of the memory 730, the processor executes a specific instruction for the process in which the mobile terminal performs normal communication within the current camped-on serving cell and the neighboring cell if the current camped-on serving cell and the neighboring cell have an intersection with the cell in the lock cell list:
if the current camped-on serving cell and the neighboring cell have an intersection with the cell in the lock cell list, determining whether the lock cell list has an idle node; and
when the lock cell list has an idle node and when the current camped-on serving cell and the neighboring cell do not exist in the lock cell list, storing the acquired attribute information of both the current camped-on serving cell and the neighboring cell into the lock cell list, and keeping, by the mobile terminal, normal communication within the current camped-on serving cell and the neighboring cell; or
when the lock cell list has no idle node, locking, by the mobile terminal, the lock cell list, and keeping, by the mobile terminal, normal communication within the current camped-on serving cell and the neighboring cell.

Further, the mobile terminal is specifically a mobile phone or a fixed wireless terminal.

Therefore, according to the mobile terminal provided in this embodiment of the present invention, the mobile terminal stores acquired attribute information of a cell into a lock cell list, and identifies whether a current camped-on cell is included in the lock cell list; and if the current camped-on cell is included in the lock cell list, the mobile terminal keeps normal communication; otherwise, communication of the mobile terminal is restricted. In this embodiment of the present invention, because the mobile terminal identifies the current camped-on cell and the cell stored in the lock cell list, the extension of a cell is enlarged, which further extends a condition for the mobile terminal to determine that the mobile terminal is far away from the serving cell in the prior art, and facilitates use for a user. In addition, when a mobile operator changes a current network, normal communication of the mobile terminal can still be ensured, thereby reducing a case that communication of the mobile terminal is restricted. Further, according to the lock cell method provided in this embodiment of the present invention, it may be further avoided that the mobile terminal is used in multiple location areas, which further protects profits of the mobile operator.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

In combination with the embodiments disclosed in this specification, method or algorithm steps may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The foregoing specific embodiments further clarify the objective, technical solutions, and beneficial effects of the present invention in detail. It should be understood that the foregoing descriptions are merely specific embodiments of the present invention, but are not intended to restrict the protection scope of the present invention. Any modification, equivalent replacement, or improvement made without departing from the principle of the present invention should fall within the protection scope of the present invention.

## Claims

1. A mobile terminal communication management method, wherein the method comprises:
acquiring, by a mobile terminal, attribute information of a current camped-on serving cell (110);
determining whether a lock cell list of the mobile terminal has an idle node (120);
when the lock cell list has no idle node, determining whether the serving cell and a neighboring cell of the serving cell have an intersection with a cell in the lock cell list (1309); and
if the serving cell and the neighboring cell have an intersection with the cell in the lock cell list, performing, by the mobile terminal, normal communication within the serving cell (140).

2. The method according to claim 1, wherein the method further comprises:
if the serving cell and the neighboring cell have no intersection with the cell in the lock cell list, restricting communication of the mobile terminal.

3. The method according to claim 1, wherein the method further comprises:
when the lock cell list of the mobile terminal has an idle node and when the attribute information of the serving cell does not exist in the lock cell list, storing the acquired attribute information of the serving cell into the lock cell list, and performing, by the mobile terminal, normal communication within the serving cell.

4. The method according to any one of claims 1 to 3, wherein the mobile terminal is a mobile phone or a fixed wireless terminal.

5. A mobile terminal communication management method, wherein the method comprises:
acquiring, by a mobile terminal, attribute information of a camped-on cell, wherein the camped-on cell comprises a serving cell on which the mobile terminal is camped and a neighboring cell of the serving cell (310);
when a lock cell list of the mobile terminal is empty, storing the acquired attribute information of the serving cell and the acquired attribute information of the neighboring cell into the lock cell list (320);
determining whether a current camped-on serving cell and a
neighboring cell of the current serving cell have an intersection with a cell in the lock cell list (330); and
if the current camped-on serving cell and the neighboring cell have an intersection with the cell in the lock cell list, performing, by the mobile terminal, normal communication within the current camped-on serving cell and the neighboring cell (340).

6. The method according to claim 5, wherein the method further comprises:
if the current camped-on serving cell and the neighboring cell have no intersection with the cell in the lock cell list, restricting communication of the mobile terminal.

7. The method according to claim 5, wherein, if the current camped-on serving cell and the neighboring cell have an intersection with the cell in the lock cell list, the performing, by the mobile terminal, normal communication within the current camped-on serving cell and the neighboring cell specifically comprises:
if the current camped-on serving cell and the neighboring cell have an intersection with the cell in the lock cell list, determining whether the lock cell list has an idle node; and
when the lock cell list has an idle node and when the current camped-on serving cell and the neighboring cell do not exist in the lock cell list, storing the acquired attribute information of both the current camped-on serving cell and the neighboring cell into the lock cell list, and performing, by the mobile terminal, normal communication within the current camped-on serving cell and the neighboring cell; or
when the lock cell list has no idle node, locking, by the mobile terminal, the lock cell list, and performing, by the mobile terminal, normal communication within the current camped-on serving cell and the neighboring cell.

8. The method according to any one of claims 5 to 7, wherein the mobile terminal is a mobile phone or a fixed wireless terminal.

9. A mobile terminal, wherein the mobile terminal comprises:
an acquiring unit (410), configured to acquire attribute information of a camped-on serving cell;
a first determining unit (420), configured to determine whether a lock cell list of the mobile terminal has an idle node;
a second determining unit (430), configured to: when the lock cell list has no idle node, determine whether the serving cell and a neighboring cell of the serving cell have an intersection with a cell in the lock cell list; and
a processing unit (440), configured to: if the serving cell and the neighboring cell have an intersection with the cell in the lock cell list, perform normal communication for the mobile terminal within the serving cell.

10. The mobile terminal according to claim 9, wherein the processing unit is further configured to:
if the serving cell and the neighboring cell have no intersection with the cell in the lock cell list, restrict communication of the mobile terminal.

11. The mobile terminal according to claim 9, wherein the mobile terminal further comprises:
a storage unit, configured to: when the lock cell list of the mobile terminal has an idle node and when the attribute information of the serving cell does not exist in the lock cell list, store the acquired attribute information of the serving cell into the lock cell list, and perform normal communication for the mobile terminal within the serving cell.

12. The mobile terminal according to any of claims 9 to 11, wherein the mobile terminal is a mobile phone or a fixed wireless terminal.

13. A mobile terminal, wherein the mobile terminal comprises:
an acquiring unit (510), configured to acquire attribute information of a camped-on cell, wherein the camped-on cell comprises a serving cell on which the mobile terminal is camped and a neighboring cell of the serving cell;
a storage unit (520), configured to: when a lock cell list of the mobile terminal is empty, store the acquired attribute information of the serving cell and the acquired attribute information of the neighboring cell into the lock cell list;
a determining unit (530), configured to determine whether a current camped-on serving cell and a neighboring cell of the current serving cell have an intersection with a cell in the lock cell list; and
a processing unit (540), configure to: if the current camped-on serving cell and the neighboring cell have an intersection with the cell in the lock cell list, keep normal communication of the mobile terminal within the current camped-on serving cell and the neighboring cell.

14. The mobile terminal according to claim 13, wherein the processing unit is further configured to:
if the current camped-on serving cell and the neighboring cell have no intersection with the cell in the lock cell list, restrict communication of the mobile terminal.

15. The mobile terminal according to claim 13, wherein the processing unit (540) further comprises:
a determining subunit (541), configured to: if the current camped-on serving cell and the neighboring cell have an intersection with the cell in the lock cell list, determine whether the lock cell list has an idle node; and
a storage subunit (542), configured to: when the lock cell list has an idle node and when the current camped-on serving cell and the neighboring cell do not exist in the lock cell list, store the acquired attribute information of both the current camped-on serving cell and the neighboring cell into the lock cell list, and keep normal communication of the mobile terminal within the current camped-on serving cell and the neighboring cell; or
a locking subunit (543), configured to: when the lock cell list has no idle node, lock the lock cell list for the mobile terminal, and keep normal communication of the mobile terminal within the current camped-on serving cell and the neighboring cell.

16. The mobile terminal according to any of claims 13 to 15, wherein the mobile terminal is a mobile phone or a fixed wireless terminal.

## Patentansprüche

1. Kommunikationsverwaltungsverfahren für ein mobiles Endgerät, wobei das Verfahren Folgendes umfasst:
Erfassen, durch ein mobiles Endgerät, von Attributinformationen einer aktuell aufgeschalteten bedienenden Zelle (110);
Bestimmen, ob eine Liste gesperrter Zellen des mobilen Endgeräts einen freien Knoten aufweist (120);
Bestimmen, ob die bedienende Zelle und eine benachbarte Zelle der bedienenden Zelle eine Überschneidung mit einer Zelle in der Liste gesperrter Zellen aufweisen, wenn die Liste gesperrter Zellen keinen freien Knoten aufweist (1309); und
Durchführen, durch das mobile Endgerät, normaler Kommunikation innerhalb der bedienenden Zelle, wenn die bedienende Zelle und die angrenzende Zelle eine Überschneidung mit der Zelle in der Liste gesperrter Zellen aufweisen (140).

2. Verfahren nach Anspruch 1, wobei das Verfahren ferner Folgendes umfasst:
Beschränken der Kommunikation des mobilen Endgeräts, wenn die bedienende Zelle und die benachbarte Zelle keine Überschneidung mit der Zelle in der Liste gesperrter Zellen aufweisen.

3. Verfahren nach Anspruch 1, wobei das Verfahren ferner Folgendes umfasst:
Speichern der erfassten Attributinformationen der bedienenden Zelle in der Liste gesperrter Zellen und Durchführen, durch das mobile Endgerät, normaler Kommunikation innerhalb der bedienenden Zelle (140), wenn die Liste gesperrter Zellen des mobilen Endgeräts einen freien Knoten aufweist und wenn die Attributinformationen der bedienenden Zelle nicht in der Liste gesperrter Zellen existieren.

4. Verfahren nach einem der Ansprüche 1 bis 3, wobei das mobile Endgerät ein Mobiltelefon oder ein stationäres drahtloses Endgerät ist.

5. Kommunikationsverwaltungsverfahren für ein mobiles Endgerät, wobei das Verfahren Folgendes umfasst:
Erfassen, durch ein mobiles Endgerät, von Attributinformationen einer aufgeschalteten Zelle, wobei die aufgeschaltete Zelle eine bedienende Zelle, auf der das mobile Endgerät aufgeschaltet ist, und eine benachbarte Zelle der bedienenden Zelle ist (310);
Speichern der erfassten Attributinformationen der bedienenden Zelle und der erfassten Attributinformationen der benachbarten Zelle in der Liste gesperrter Zellen, wenn eine Liste gesperrter Zellen des mobilen Endgeräts leer ist (320);
Bestimmen, ob eine aktuell aufgeschaltete bedienende Zelle und eine benachbarte Zelle der aktuell bedienenden Zelle eine Überschneidung mit einer Zelle in der Liste gesperrter Zellen aufweisen (330); und
Durchführen, durch das mobile Endgerät, normaler Kommunikation innerhalb der aktuell aufgeschalteten bedienenden Zelle und der benachbarten Zelle, wenn die aktuell aufgeschaltete bedienende Zelle und die benachbarte Zelle eine Überschneidung mit der Zelle in der Liste gesperrter Zellen aufweisen (340).

6. Verfahren nach Anspruch 5, wobei das Verfahren ferner Folgendes umfasst:
Beschränken der Kommunikation des mobilen Endgeräts, wenn die aktuell aufgeschaltete bedienende Zelle und die benachbarte Zelle keine Überschneidung mit der Zelle in der Liste gesperrter Zellen aufweisen.

7. Verfahren nach Anspruch 5, wobei, wenn die aktuell aufgeschaltete bedienende Zelle und die benachbarte Zelle eine Überschneidung mit der Zelle in der Liste gesperrter Zellen aufweisen, das Durchführen, durch das mobile Endgerät, normaler Kommunikation innerhalb der aktuell aufgeschalteten bedienenden Zelle und der benachbarten Zelle im Besonderen Folgendes umfasst:
Bestimmen, ob die Liste gesperrter Zellen einen freien Knoten aufweist, wenn die aktuell aufgeschaltete bedienende Zelle und die benachbarte Zelle eine Überschneidung mit der Zelle in der Liste gesperrter Zellen aufweisen; und
Speichern der erfassten Attributinformationen sowohl der aktuell aufgeschalteten bedienenden Zelle als auch der benachbarten Zelle in der Liste gesperrter Zellen und Durchführen, durch das mobile Endgerät, normaler Kommunikation innerhalb der aktuell aufgeschalteten bedienenden Zelle und der benachbarten Zelle, wenn die Liste gesperrter Zellen einen freien Knoten aufweist und wenn die aktuell aufgeschaltete bedienende Zelle und die benachbarte Zelle nicht in der Liste gesperrter Zellen existieren; oder
Sperren, durch das mobile Endgerät, der Liste gesperrter Zellen und Durchführen, durch das mobile Endgerät, normaler Kommunikation innerhalb der aktuell aufgeschalteten bedienenden Zelle und der benachbarten Zelle, wenn die Liste gesperrter Zellen keinen freien Knoten aufweist.

8. Verfahren nach einem der Ansprüche 5 bis 7, wobei das mobile Endgerät ein Mobiltelefon oder ein stationäres drahtloses Endgerät ist.

9. Mobiles Endgerät, wobei das mobile Endgerät Folgendes umfasst:
eine Erfassungseinheit (410), die konfiguriert ist zum Erfassen von Attributinformationen einer aufgeschalteten bedienenden Zelle;
eine erste Bestimmungseinheit (420), die konfiguriert ist zum Bestimmen, ob eine Liste gesperrter Zellen des mobilen Endgeräts einen freien Knoten aufweist;
eine zweite Bestimmungseinheit (430), die konfiguriert ist zum: Bestimmen, ob die bedienende Zelle und eine benachbarte Zelle der bedienenden Zelle eine Überschneidung mit einer Zelle in der Liste gesperrter Zellen aufweisen, wenn die Liste gesperrter Zellen keinen freien Knoten aufweist; und
eine Verarbeitungseinheit (440), die konfiguriert ist zum: Durchführen normaler Kommunikation für das mobile Endgerät innerhalb der bedienenden Zelle, wenn die bedienende Zelle und die benachbarte Zelle eine Überschneidung mit der Zelle in der Liste gesperrter Zellen aufweisen.

10. Mobiles Endgerät nach Anspruch 9, wobei die Verarbeitungseinheit ferner konfiguriert ist zum:
Beschränken von Kommunikation des mobilen Endgeräts, wenn die bedienende Zelle und die benachbarte Zelle keine Überschneidung mit der Zelle in der Liste gesperrter Zellen aufweisen.

11. Mobiles Endgerät nach Anspruch 9, wobei das mobile Endgerät ferner Folgendes umfasst:
eine Speichereinheit, die konfiguriert ist zum: Speichern der erfassten Attributinformationen der bedienenden Zelle in der Liste gesperrter Zellen und Durchführen normaler Kommunikation für das mobile Endgerät innerhalb der bedienenden Zelle, wenn die Liste gesperrter Zellen des mobilen Endgeräts einen freien Knoten aufweist und wenn die Attributinformationen der bedienenden Zelle nicht in der Liste gesperrter Zellen existieren.

12. Mobiles Endgerät nach einem der Ansprüche 9 bis 11, wobei das mobile Endgerät ein Mobiltelefon oder ein stationäres drahtloses Endgerät ist.

13. Mobiles Endgerät, wobei das mobile Endgerät Folgendes umfasst:
eine Erfassungseinheit (510), die konfiguriert ist zum Erfassen von Attributinformationen einer aufgeschalteten Zelle, wobei die aufgeschaltete Zelle eine bedienende Zelle, auf der das mobile Endgerät aufgeschaltet ist, und eine benachbarte Zelle der bedienenden Zelle umfasst;
eine Speichereinheit (520), die konfiguriert ist zum: Speichern der erfassten Attributinformationen der bedienenden Zelle und der erfassten Attributinformationen der benachbarten Zelle in der Liste gesperrter Zellen, wenn eine Liste gesperrter Zellen des mobilen Endgeräts leer ist;
eine Bestimmungseinheit (530), die konfiguriert ist zum Bestimmen, ob eine aktuell aufgeschaltete bedienende Zelle und eine benachbarte Zelle der aktuell bedienenden Zelle eine Überschneidung mit einer Zelle in der Liste gesperrter Zellen aufweisen; und
eine Verarbeitungseinheit (540), die konfiguriert ist zum: Beibehalten normaler Kommunikation des mobilen Endgeräts innerhalb der aktuell aufgeschalteten bedienenden Zelle und der benachbarten Zelle, wenn die aktuell aufgeschaltete bedienende Zelle und die benachbarte Zelle eine Überschneidung mit der Zelle in der Liste gesperrter Zellen aufweisen.

14. Mobiles Endgerät nach Anspruch 13, wobei die Verarbeitungseinheit ferner konfiguriert ist zum:
Beschränken der Kommunikation des mobilen Endgeräts, wenn die aktuell aufgeschaltete bedienende Zelle und die benachbarte Zelle keine Überschneidung mit der Zelle in der Liste gesperrter Zellen aufweisen.

15. Mobiles Endgerät nach Anspruch 13, wobei die Verarbeitungseinheit (540) ferner Folgendes umfasst:
eine Bestimmungsuntereinheit (541), die konfiguriert ist zum: Bestimmen, ob die Liste gesperrter Zellen einen freien Knoten aufweist, wenn die aktuell aufgeschaltete bedienende Zelle und die benachbarte Zelle eine Überschneidung mit der Zelle in der Liste gesperrter Zellen aufweisen; und
eine Speicheruntereinheit (542), die konfiguriert ist zum: Speichern der erfassten Attributinformationen sowohl der aktuell aufgeschalteten bedienenden Zelle als auch der benachbarten Zelle in der Liste gesperrter Zellen und Beibehalten normaler Kommunikation des mobilen Endgeräts innerhalb der aktuell aufgeschalteten bedienenden Zelle und der benachbarten Zelle, wenn die Liste gesperrter Zellen einen freien Knoten aufweist und wenn die aktuell aufgeschaltete bedienende Zelle und die benachbarte Zelle nicht in der Liste gesperrter Zellen existieren; oder
eine Sperruntereinheit (543), die konfiguriert ist zum: Sperren der Liste gesperrter Zellen für das mobile Endgerät und Beibehalten normaler Kommunikation des mobilen Endgeräts innerhalb der aktuell aufgeschalteten bedienenden Zelle und der benachbarten Zelle, wenn die Liste gesperrter Zellen keinen freien Knoten aufweist.

16. Mobiles Endgerät nach einem der Ansprüche 13 bis 15, wobei das mobile Endgerät ein Mobiltelefon oder ein stationäres drahtloses Endgerät ist.

## Revendications

1. Procédé de gestion de communication pour terminal mobile, le procédé comportant les
étapes consistant à :
faire acquérir par un terminal mobile des informations d'attributs d'une cellule de desserte actuelle de positionnement (110) ;
déterminer si une liste de cellules verrouillées du terminal mobile comprend un noeud inactif (120) ;
lorsque la liste de cellules verrouillées ne comprend aucun noeud inactif, déterminer si la cellule de desserte et une cellule voisine de la cellule de desserte présentent une intersection avec une cellule de la liste de cellules verrouillées (139) ; et
si la cellule de desserte et la cellule voisine présentent une intersection avec la cellule de la liste de cellules verrouillées, faire réaliser par le terminal mobile une communication normale à l'intérieur de la cellule de desserte (140).

2. Procédé selon la revendication 1, le procédé comportant en outre l'étape consistant :
si la cellule de desserte et la cellule voisine ne présentent aucune intersection avec la cellule de la liste de cellules verrouillées, à limiter la communication du terminal mobile.

3. Procédé selon la revendication 1, le procédé comportant en outre les étapes consistant :
lorsque la liste de cellules verrouillées du terminal mobile comprend un noeud inactif et lorsque les informations d'attributs de la cellule de desserte n'existent pas dans la liste de cellules verrouillées, à conserver les informations d'attributs acquises de la cellule de desserte dans la liste de cellules verrouillées, et à faire réaliser par le terminal mobile une communication normale à l'intérieur de la cellule de desserte.

4. Procédé selon l'une quelconque des revendications 1 à 3, le terminal mobile étant un téléphone mobile ou un terminal fixe sans fil.

5. Procédé de gestion de communication pour terminal mobile, le procédé comportant les étapes consistant à :
faire acquérir par un terminal mobile des informations d'attributs d'une cellule de positionnement, la cellule de positionnement comportant une cellule de desserte sur laquelle est positionné le terminal mobile et une cellule voisine de la cellule de desserte (310) ;
lorsqu'une liste de cellules verrouillées du terminal mobile est vide, conserver les informations d'attributs acquises de la cellule de desserte et les informations d'attributs acquises de la cellule voisine dans la liste de cellules verrouillées (320) ;
déterminer si une cellule de desserte actuelle de positionnement et une cellule voisine de la cellule de desserte actuelle présentent une intersection avec une cellule de la liste de cellules verrouillées (330) ; et
si la cellule de desserte actuelle de positionnement et la cellule voisine présentent une intersection avec la cellule de la liste de cellules verrouillées, faire réaliser par le terminal mobile une communication normale à l'intérieur de la cellule de desserte actuelle de positionnement et de la cellule voisine (340).

6. Procédé selon la revendication 5, le procédé comportant en outre l'étape consistant :
si la cellule de desserte actuelle de positionnement et la cellule voisine ne présentent aucune intersection avec la cellule de la liste de cellules verrouillées, à limiter la communication du terminal mobile.

7. Procédé selon la revendication 5, la réalisation par le terminal mobile d'une communication normale à l'intérieur de la cellule de desserte actuelle de positionnement et de la cellule voisine comportant spécifiquement, si la cellule de desserte actuelle de positionnement et la cellule voisine présentent une intersection avec la cellule de la liste de cellules verrouillées, les étapes consistant :
si la cellule de desserte actuelle de positionnement et la cellule voisine présentent une intersection avec la cellule de la liste de cellules verrouillées, à déterminer si la liste de cellules verrouillées comprend un noeud inactif ; et
lorsque la liste de cellules verrouillées comprend un noeud inactif et lorsque la cellule de desserte actuelle de positionnement et la cellule voisine n'existent pas dans la liste de cellules verrouillées, à conserver les informations d'attributs acquises à la fois de la cellule de desserte actuelle de positionnement et de la cellule voisine dans la liste de cellules verrouillées, et à faire réaliser par le terminal mobile une communication normale à l'intérieur de la cellule de desserte actuelle de positionnement et de la cellule voisine ; ou
lorsque la liste de cellules verrouillées ne comprend aucun noeud inactif, à faire verrouiller par le terminal mobile la liste de cellules verrouillées, et à faire réaliser par le terminal mobile une communication normale à l'intérieur de la cellule de desserte actuelle de positionnement et de la cellule voisine.

8. Procédé selon l'une quelconque des revendications 5 à 7, le terminal mobile étant un téléphone mobile ou un terminal fixe sans fil.

9. Terminal mobile, le terminal mobile comportant :
une unité (410) d'acquisition, configurée pour acquérir des informations d'attributs d'une cellule de desserte de positionnement ;
une première unité (420) de détermination, configurée pour déterminer si une liste de cellules verrouillées du terminal mobile comprend un noeud inactif ;
une deuxième unité (430) de détermination, configurée : lorsque la liste de cellules verrouillées ne comprend aucun noeud inactif, pour déterminer si la cellule de desserte et une cellule voisine de la cellule de desserte présentent une intersection avec une cellule de la liste de cellules verrouillées ; et
une unité (440) de traitement, configurée : si la cellule de desserte et la cellule voisine présentent une intersection avec la cellule de la liste de cellules verrouillées, pour réaliser une communication normale pour le terminal mobile à l'intérieur de la cellule de desserte.

10. Terminal mobile selon la revendication 9, l'unité de traitement étant en outre configurée :
si la cellule de desserte et la cellule voisine ne présentent aucune intersection avec la cellule de la liste de cellules verrouillées, pour limiter la communication du terminal mobile.

11. Terminal mobile selon la revendication 9, le terminal mobile comportant en outre :
une unité de stockage, configurée : lorsque la liste de cellules verrouillées du terminal mobile comprend un noeud inactif et lorsque les informations d'attributs de la cellule de desserte n'existent pas dans la liste de cellules verrouillées, conserver les informations d'attributs acquises de la cellule de desserte dans la liste de cellules verrouillées, et réaliser une communication normale pour le terminal mobile à l'intérieur de la cellule de desserte.

12. Terminal mobile selon l'une quelconque des revendications 9 à 11, le terminal mobile étant un téléphone mobile ou un terminal fixe sans fil.

13. Terminal mobile, le terminal mobile comportant :
une unité (510) d'acquisition, configurée pour acquérir des informations d'attributs d'une cellule de positionnement, la cellule de positionnement comportant une cellule de desserte sur laquelle est positionné le terminal mobile et une cellule voisine de la cellule de desserte ;
une unité de stockage (520), configurée : lorsqu'une liste de cellules verrouillées du terminal mobile est vide, pour conserver les informations d'attributs acquises de la cellule de desserte et les informations d'attributs acquises de la cellule voisine dans la liste de cellules verrouillées ;
une unité (530) de détermination, configurée pour déterminer si une cellule de desserte actuelle de positionnement et une cellule voisine de la cellule de desserte actuelle présentent une intersection avec une cellule de la liste de cellules verrouillées ; et
une unité (540) de traitement, configurée : si la cellule de desserte actuelle de positionnement et la cellule voisine présentent une intersection avec la cellule de la liste de cellules verrouillées, pour maintenir une communication normale du terminal mobile à l'intérieur de la cellule de desserte actuelle de positionnement et de la cellule voisine.

14. Terminal mobile selon la revendication 13, l'unité de traitement étant en outre configurée :
si la cellule de desserte actuelle de positionnement et la cellule voisine ne présentent aucune intersection avec la cellule de la liste de cellules verrouillées, pour limiter la communication du terminal mobile.

15. Terminal mobile selon la revendication 13, l'unité (540) de traitement comportant en outre :
une sous-unité (541) de détermination, configurée : si la cellule de desserte actuelle de positionnement et la cellule voisine présentent une intersection avec la cellule de la liste de cellules verrouillées, pour déterminer si la liste de cellules verrouillées comprend un noeud inactif ; et
une sous-unité (542) de stockage, configurée : lorsque la liste de cellules verrouillées comprend un noeud inactif et lorsque la cellule de desserte actuelle de positionnement et la cellule voisine n'existent pas dans la liste de cellules verrouillées, pour conserver les informations d'attributs acquises à la fois de la cellule de desserte actuelle de positionnement et de la cellule voisine dans la liste de cellules verrouillées, et pour maintenir une communication normale du terminal mobile à l'intérieur de la cellule de desserte actuelle de positionnement et de la cellule voisine ; ou
une sous-unité (543) de verrouillage, configurée : lorsque la liste de cellules verrouillées ne comprend aucun noeud inactif, pour verrouiller la liste de cellules verrouillées pour le terminal mobile, et pour maintenir une communication normale du terminal mobile à l'intérieur de la cellule de desserte actuelle de positionnement et de la cellule voisine.

16. Terminal mobile selon l'une quelconque des revendications 13 à 15, le terminal mobile étant un téléphone mobile ou un terminal fixe sans fil.
